# EUROPEAN PATENT SPECIFICATION

(11) **EP 2 309 796 B1**
(45) Date of publication and mention of the grant of the patent: **04.07.2012**
(21) Application number: 09360044.3
(22) Date of filing: 07.10.2009
(51) Int. Cl.: H04W 36/08

(54) **Handover control**
Weiterreichungssteuerung
Contrôle de handover

(43) Date of publication of application: 13.04.2011
(73) Proprietor: Alcatel Lucent, 75007 Paris (FR)
(72) Inventor: Brend, Graham, Bathford, Bath BA1 7UE (GB)
(74) Representative: Sarup, David Alexander

(56) References cited:
- EP-A1- 2 086 253
- WO-A2-2008/033259
- US-A1- 2008 051 091
- US-A1- 2009 075 666

## Description

### FIELD OF THE INVENTION

The present invention relates to a method of controlling handover of user equipment to a femto base station of a wireless telecommunications network, a femto gateway and a computer program product.

### BACKGROUND

In a cellular wireless telecommunications system, radio coverage is provided by areas known as cells. A base station is located in each cell to provide the radio coverage area. Traditional base stations provide coverage in relatively large geographical areas and these cells are often referred to as macro cells. It is possible to provide smaller-sized cells, often within a macro cell. Such smaller-sized cells are sometimes referred to as micro cells, pico cells or femto cells. Such small cells are typically established by providing a small-cell base station that provides radio coverage having a relatively limited range within the radio coverage area of a macro cell. The transmission power of the small cell base station is relatively low and, hence, each small cell provides a smaller coverage area compared to that of a macro cell and covers, for example, an office or a home. A group of such small cell base stations may together provide a wireless small-cell network.

Such small cells are typically provided where the communications coverage provided by the macro cell is poor or where a user wishes to use an alternative communications link provided locally, by the small-cell base station, to communicate with the core network. Such a situation might arise where, for example, a user has a pre-existing communications link and the user wishes to utilise that link in preference to that provided by a macro cell network provider to communicate with the core network. The group of small-cell base stations providing the wireless small-cell network can together provide extended local coverage to user equipment throughout, for example, a home or an office building by using multiple small-cell base stations distributed throughout those buildings which enables each of those base stations to transmit at a lower power than would otherwise be necessary if coverage was to be provided by a single small-cell base station.

US 2009/0075666 A1 discloses techniques for sending and receiving signalling messages on shared and dedicated channels in a wireless communication system during handover. EP 2 086 253 A1 discloses a method and apparatus for radio link failure recovery in a wireless communications network in which additional candidate base stations are prepared at a predetermined time after an initial target base station should handover have not yet occurred. US 2008/0051091 A1 discloses arrangements in which a timer is started in a macro base station and in the user equipment which, when the timers expire, cause the user equipment to monitor for paging messages and the macro base stations to transmit handover information through a paging channel.

However, the proliferation of the deployment of such small-cell base station increases the complexity of controlling the handover of user equipment. Accordingly, it is desired to provide an improved technique for controlling handover.

### SUMMARY

According to a first aspect, there is provided a method of controlling handover of user equipment to a femto base station of a wireless telecommunications network, as claimed in claim 1.

The first aspect recognises that supporting the ability for active calls to be handed over to a femto base station is important for the end user experience. However, whilst mechanisms exist for performing handover, situations can occur where a failure in the handover procedure occurs. The first aspect also recognises that any unnecessary delay in detecting that a failure has occurred can reduce the likelihood that the network can take ameliorative action to prevent an active call being dropped. In addition, the first aspect recognises that often limited resources are allocated prior to a handover occurring and these limited resources may rapidly become pre-allocated to support handovers which may never occur. Such pre-allocation may preclude subsequent, potentially successful handovers from being initiated since no further resources are available to support those subsequent handovers. Furthermore, the first aspect recognises that the failure of a handover is often handled in a non-deterministic manner and so the network often has little information to know why the handover failed.

Accordingly, a method of controlling handover to a femto base station is provided. A first message may be transmitted to a target base station to initiate handover of user equipment. After a particular amount of time, resources allocated to support the handover may be released if an acknowledgement of the first message is not received.

In this way, it can be seen that should the target femto base station fail to respond to the initiated handover procedure, then a failure may be detected and ameliorative action may be taken. The failure to respond to the handover request may occur for any number of different reasons such as, for example, a failure in the internal operation of the target femto base station, a failure in the communication path with the target femto base station, or due to the target femto base station either choosing to or not being able to respond to the handover request. The target femto base station may not respond because the request is not in a form it expected (such as, for example, the target femto base station believing that it may be being spoofed by unauthorised handover requests) or because the target base station has no further capacity. By identifying that the failure has occurred early enough, it may then be possible for the network to take ameliorative action to prevent the active call being dropped. Also, by identifying the failure at an early stage, resources which may have been pre-allocated to support the handover can be released and therefore be made available to other subsequent handovers which may be more likely to occur. Furthermore, by identifying that the failure occurred at the target femto base station, the failure can be handled in a deterministic manner which may allow the network to recover as swiftly as possible.

In one embodiment, the step of causing resources allocated to support the handover to be released comprises: releasing resources allocated within the femto gateway to support the handover. Accordingly, those limited resources which may have been pre-allocated within the femto gateway to support the handover may be released, thereby making these resources available for other handovers.

The step of causing resources allocated to support the handover to be released comprises: transmitting a second message from the femto gateway to a source network element which initiated the handover to cause resources allocated within the source network element to support the handover to be released. Accordingly, a message may be transmitted to the network element which was the source of the handover request to cause the resources allocated within that network element to support that handover to be released, thereby also freeing up limited resources which may then be utilised to support other handovers.

In one embodiment, the source network element comprises one of a source femto base station and a core network macro element. Accordingly, the handover may be from a source femto base station to a target femto base station (i.e. a femto to femto handover) or may be from a macro element to a target femto base station (i.e. a macro to femto handover).

In one embodiment, the step of causing resources allocated to support the handover to be released comprises: transmitting a third message to the target femto base station to cause resources allocated within the target femto base station to support the handover to be released. Accordingly, a message may be transmitted to the target femto base station to cause that base station to release any resources allocated to support the handover. This once again helps to make available limited resources for use in support of potentially more successful handovers.

In one embodiment, the method comprises the step of: prior to expiration of the predetermined period of time, in the event that the acknowledgement of the message is not received at the femto gateway from the target femto base station, re-transmitting the message from the femto gateway to the target femto base station advising that the handover of the user equipment is to occur. Accordingly, the message may be retransmitted within the predetermined period of time and only if no acknowledgement is still received, then the allocated resources may be caused to be released. In this way, the effects of a temporary failure may be obviated by retransmitting the message. A failure to respond to more than one of these messages may give increased confidence that something other than a transient failure has occurred.

In one embodiment, the first message comprises a radio access network application protocol user adaption message incorporating a radio access network application protocol relocation request message and the acknowledgement message comprises a radio access network application protocol user adaption message incorporating a radio access network application protocol relocation request acknowledge message.

In one embodiment, the second message comprises one of a radio access network application protocol user adaption message incorporating a radio access network application protocol relocation preparation failure message, a radio access network application protocol user adaption disconnect message and a radio access network application protocol relocation failure message.

In one embodiment, the third message comprises a radio access network application protocol user adaption disconnect message.

According to a second aspect of the present invention, there is provided a femto gateway, as claimed in claim 9.

In one embodiment, the handover logic is operable to cause resources allocated to support the handover to be released by releasing resources allocated within the femto gateway to support the handover.

The handover logic is operable to cause resources allocated to support the handover to be released by transmitting a second message to a source network element which initiated the handover to cause resources allocated within the source network element to support the handover to be released.

In one embodiment, the source network element comprises one of a source femto base station and a core network macro element.

In one embodiment, the handover logic is operable to cause resources allocated to support the handover to be released by transmitting a third message to the target femto base station to cause resources allocated within the target femto base station to support the handover to be released.

In one embodiment, the handover logic is operable, prior to expiration of the predetermined period of time, in the event that the acknowledgement of the message is not received from the target femto base station, to re-transmit the first message from the femto gateway to the target femto base station advising that the handover of the user equipment is to occur.

In one embodiment, the first message comprises a radio access network application protocol user adaption message incorporating a radio access network application protocol relocation request message and the acknowledgement message comprises a radio access network application protocol user adaption message incorporating a radio access network application protocol relocation request acknowledge message.

In one embodiment, the second message comprises one of a radio access network application protocol user adaption message incorporating a radio access network application protocol relocation preparation failure message, a radio access network application protocol user adaption disconnect message and a radio access network application protocol relocation failure message.

In one embodiment, the third message comprises a radio access network application protocol user adaption disconnect message.

According to a third aspect of the present invention, there is provided a computer program product operable, when executed on a computer, to perform the method steps of the first aspect.

Further particular and preferred aspects are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

Embodiments of the present invention will now be described further, with reference to the accompanying drawings, in which:
Figure 1 illustrates the main components of a wireless telecommunications network according to one embodiment;
Figure 2 illustrates a general femto cell deployment within one macro cell shown in Figure 1;
Figure 3 illustrates schematically the flow of messages between components of the telecommunications network when performing a femto to femto handover according to one embodiment;
Figure 4 illustrates schematically the flow of messages between components of the telecommunications network when performing a femto to femto handover according to one embodiment;
Figure 5 illustrates schematically the flow of messages between components of the telecommunications network when performing a macro to femto handover according to one embodiment; and
Figure 6 the main components of the femto gateway according to one embodiment.

### DESCRIPTION OF THE EMBODIMENTS

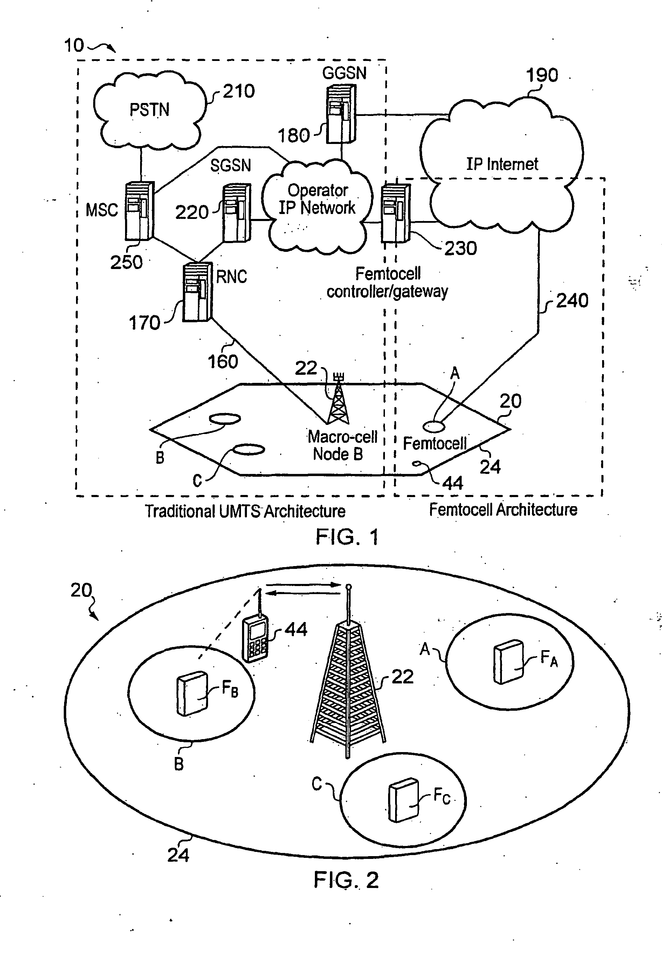

Figure 1 illustrates a wireless communication system, generally 10, according to one embodiment. User equipment 44 roam through the wireless communication system 10. Base stations 22 are provided which support respective macro cells 24. A number of such base stations are provided, which are distributed geographically in order to provide a wide area of coverage to the user equipment 44. When user equipment 44 is within a macro cell 24 supported by the base station 22 then communications may be established between the user equipment 44 and the base station 22 over an associated radio link. Each base station typically supports a number of sectors. Typically, a different antenna within a base station supports an associated sector. Of course, it will be appreciated that Figure 1 illustrates a small subset of the total number of user equipment and base stations that may be present in a typical communications system.

The wireless communication system 10 is managed by a radio network controller 170. The radio network controller 170 controls the operation of the wireless communications system 10 by communicating with the base stations 22 over a backhaul communications link 160. The network controller 170 also communicates with the user equipment 44 via their respective radio links in order to efficiently manage the wireless communication system 10.

The radio network controller 170 maintains a neighbour list which includes information about the geographical relationship between cells supported by base stations. In addition, the radio network controller 170 maintains location information which provides information on the location of the user equipment within the wireless communications system 10. The radio network controller 170 is operable to route traffic via circuit-switched and packet-switched networks. Hence, a mobile switching centre 250 is provided with which the radio network controller 170 may communicate. The mobile switching centre 250 then communicates with a circuit-switched network such as a public switched telephone network (PSTN) 210. Likewise, the network controller 170 communicates with service general packet radio service support nodes (SGSNs) 220 and a gateway general packet radio support node (GGSN) 180. The GGSN then communicates with a packet-switch core 190 such as, for example, the Internet.

As shown in more detail in Figure 2, there are provided small cell base stations, in this example femto cell base stations F_{A} to F_{C}, each of which provides a femto cell A to C in the vicinity of a building within which the associated femto cell base station is installed. The femto cells A to C provide local communications coverage for a user in the vicinity of those buildings. Each femto cell base station F_{A} to Fc communicates via a femtocell controller/gateway 230. A handover or camping event occurs between the base station 22 and the femto cell base stations F_{A} to Fc when the femto base stations F_{A} to F_{C} detect that user equipment comes within range. The femto cell base stations F_{A} to F_{C} typically utilise the user's broadband Internet connection 240 (such as ADSL, Cable, Ethernet, etc.) as a backhaul.

Femto cell base stations F_{A} to Fc are lower-power, low-cost, user-deployed base stations that provide a high cellular quality of service in residential or enterprise environment. In contrast to current macro cell approaches where complex and highly reliable base stations are deployed to strategic locations decided by the network owner, the femto cell base stations F_{A} to F_{C} are provided locally by customers. Such femto cell base stations F_{A} to Fc provide local coverage in areas of the macro network where quality of service may be low. Hence, the femto celt base stations F_{A} to Fc provide for improved quality of service in areas which are difficult for network operators. To reduce the cost of the femto base stations F_{A} to F_{C} and to reduce complexity and interference effects of the femto cell on other user equipment within the macro cell, the transmission power of the femto cell base station F_{A} to F_{C} is relatively low in order to restrict the size of the femto cell to a range of tens of metres or less. The femto cell base stations F_{A} to F_{C} have extensive auto-configuration and self-optimisation capability to enable a simply plug-and-play deployment. As such, they are designed to automatically integrate themselves into an existing macro cellular wireless network 10.

In particular, the femto cells are normally grouped into clusters and each femto cell cluster behaves like a single RNC when communicating with an SGSN in an existing packet switch core network or when communication with a MSC in an existing circuit switched core network. However, given that the RNC functionality is geographically dispersed across a large number of network elements, it is necessary to deploy a femto gateway for each cluster of femto cells. This femto gateway terminates the signalling interfaces between the traditional core network elements and the femto cell cluster, thereby creating the notion of a single virtual RNC. This virtual RNC represents the femto cell cluster as a whole. The femto gateway supports a number of procedures that are implemented on the femtos themselves.

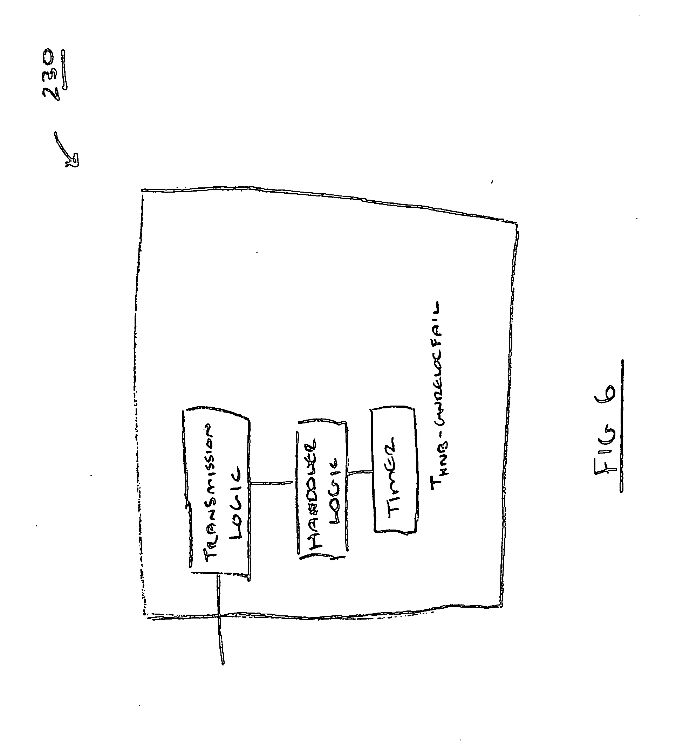

Before discussing the embodiments in any more detail, in overview, those embodiments implement functionality in the femto gateway 230, illustrated in more detail in Figure 6, which handles a failure in the handover procedure. In particular, the functionality handles the failure to receive a response from a femto base station that is the target of the handover procedure. A timer is implemented on the femto gateway 230 so that when it expires, the femto gateway 230 determines that the target femto base station is unable to successfully prepare resources for the handover and hence the femto gateway 230 can use this event as a trigger to tidy up any internal resources it has allocated in support of the handover procedure. In addition, the femto gateway 230 can inform the base station that is the source of the handover procedure that the procedure has failed and can then enable that femto base station to take the appropriate action.

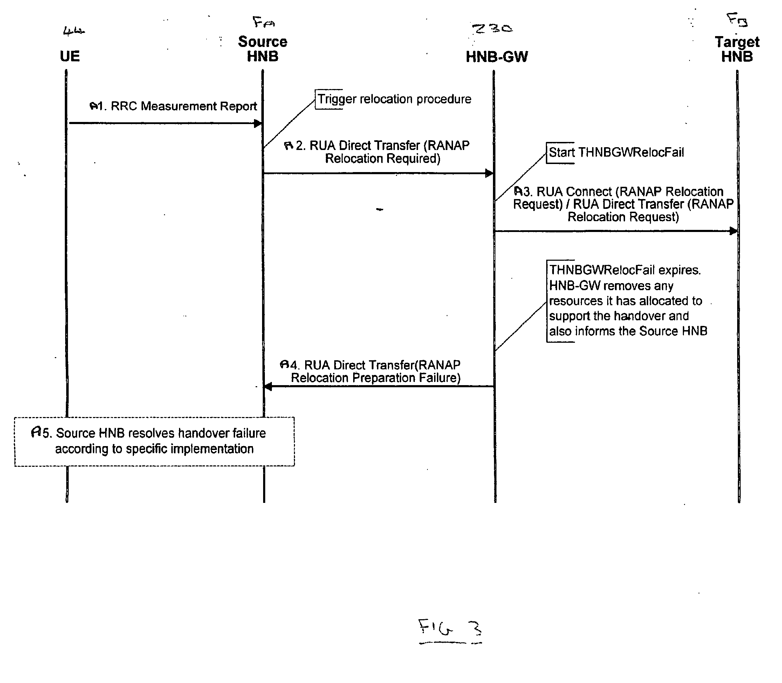

Figure 3 illustrates the follow of message when between the main components of the wireless telecommunications network when initiating handover according to one embodiment. In this example, the user equipment 44 is currently being supported by the femto base station F_{A} (often referred to as the source Home NodeB - HNB) and handover is to occur to the femto base station F_{B} (often referred to as the target Home NodeB - HNB). The user equipment 44 is currently supporting an active call but notices that the quality of service provided by the femto base station F_{A} is decreasing. In accordance with a standard procedure, the user equipment detects the presence of the femto base station F_{B}.

At step A1, the user equipment 44 provides a radio resource control (RRC) measurement report containing details of the femto base station F_{B} to the femto base station F_{A}. The femto base station F_{A} determines that handover should occur to the femto base station F_{B} and triggers a relocation procedure to handover the user equipment from the source femto base station F_{A} to the target femto base station F_{B}.

Hence, at step A2, a radio access network application protocol user adaption (RUA) direct transfer message which encapsulates a radio access network application protocol (RANAP) relocation required message is transmitted from the source femto base station F_{A} to the femto gateway 230 (often referred to as HNB Gateway - HNB-GW).

The femto gateway 230 then, at step A3, transmits either an RUA connect message encapsulating a RANAP relocation request message or a RUA direct transfer message encapsulating a RANAP relocation request message to the target femto base station F_{B}. The femto gateway also starts a timer T_{HNB-GWRELOCFAIL}.

Optionally, after a particular amount of time, the femto gateway 230 may retransmit RUA connect message encapsulating a RANAP relocation request message or a RUA direct transfer message encapsulating a RANAP relocation request message to the target femto base station F_{B}.

When the timer T_{HNB-GWRELOCFAIL} reaches a predetermined time from the initial transmission of the message transmitted at step A3 (or if a countdown timer is used, the timer reaches zero) and no acknowledgement message has been received from the target femto base station F_{B} (such as an RUA direct transfer message encapsulating a RANAP relocation request acknowledge message) then it can be assumed that, for whatever reason, a failure has occurred at the target femto base station F_{B}.

Accordingly, the femto gateway 230 at this stage releases any resources which it has allocated to support the handover. For example, any entries in any pending request tables may be deleted and any mapping between the user equipment 44 and the target femto base station F_{B} may be deleted. Although the process could be allowed to finish at this point and the other network nodes involved in the handover could be allowed to time-out and assume that a failure has occurred somewhere in the network, in this embodiment the occurrence of the failure is promulgated back to the source femto base station F_{A}.

Accordingly, at step A4, an RUA direct transfer message encapsulating a RANAP relocation preparation failure is transmitted from the femto gateway 230 to the source femto base station F_{A}. This message identifies to the source femto base station F_{A} that the relocation procedure has failed.

At step A5, the source femto base station F_{A} can then take any ameliorative action required, dependent on the particular deployment and implementation used.

Hence, it can be seen that when a relocation is unsuccessful, resources which have been allocated to support the handover may be freed up rapidly and the failure can be resolved in a deterministic manner.

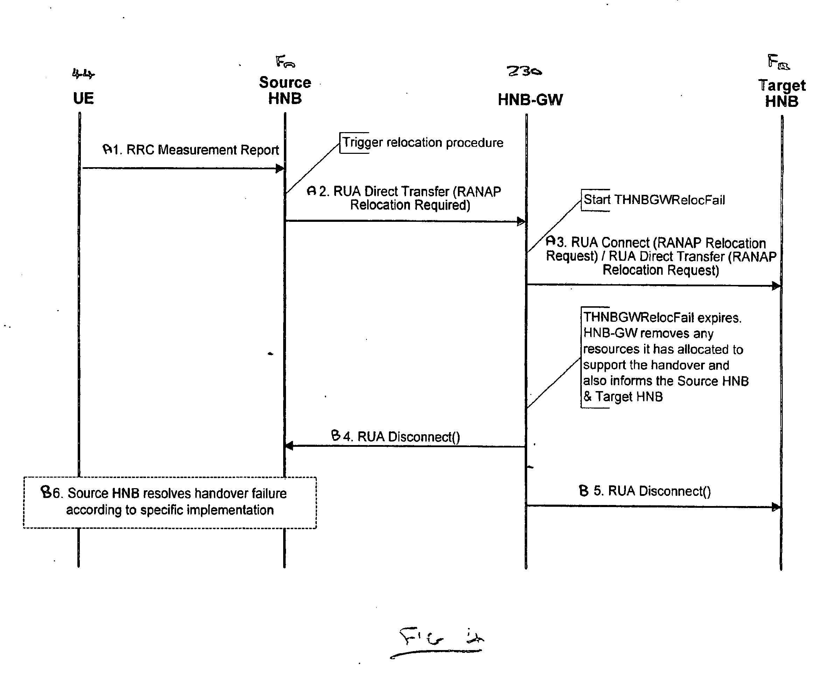

Figure 4 illustrates the main message transmissions occurring between network elements when initiating handover according to one embodiment. In this example, once again, the user equipment 44 is currently being supported by the femto base station F_{A} and handover is to occur to the femto base station F_{B}. The user equipment 44 is currently supporting an active call but notices that the quality of service provided by the femto base station F_{A} is decreasing. In accordance with a standard procedure, the user equipment detects the presence of the femto base station F_{B}.

The initial steps prior to step B4 are identical to those mentioned in relation to Figure 3 above and so will not be repeated here.

However, the process from step B4 onwards differs, as will now be explained.

When the timer T_{HNB-GWRELOCFAIL} expires, the femto gateway 230 once again releases any resources which it has allocated to support the handover, but also informs both the source femto base station F_{A} and the target femto base station F_{B} of the failure.

Hence, at step B4, the femto gateway 230 transmits an RUA disconnect message to the source femto base station F_{A}. It will be appreciated that in contrast to the RUA direct transfer message mentioned in relation to Figure 3 above, the RUA disconnect message effectively ends the session which was set up between the source femto base station F_{A} and the femto gateway 230; other sessions between other femto base stations and the femto gateway 230 will remain unaffected. This approach may be particularly effective where spoofing is suspected since the RUA direct transfer message does not end the session and so many outstanding sessions could otherwise be maintained. However, the use of the RUA disconnect message prevents this from happening.

In addition the femto gateway 230 sends, at step B5, an RUA disconnect message to the target femto base station F_{B}. This message also effectively ends any session between the femto gateway 230 and the target femto base station F_{B}; other sessions between other femto base stations and the femto gateway 230 will remain unaffected. This message is transmitted because it may be that the message(s) transmitted at step A3 reached the target femto base station F_{B} and caused resources to be allocated but, for whatever reason, no acknowledgement was received by the femto gateway 230. The transmission of the RUA disconnect message will cause the target femto base station F_{B} to release those resources, if indeed they were ever allocated. If no session has even been established, the target femto base station will simply ignore the RUA disconnect message.

At step B6, the source femto base station F_{A} can then take any ameliorative action required, dependent on the particular deployment and implementation used.

Once again, it can be seen that this approach helps to free up resources more quickly and provides a deterministic outcome to the handover failure. Again, how the network resolves the failure will depend on the particular deployment and implementation used.

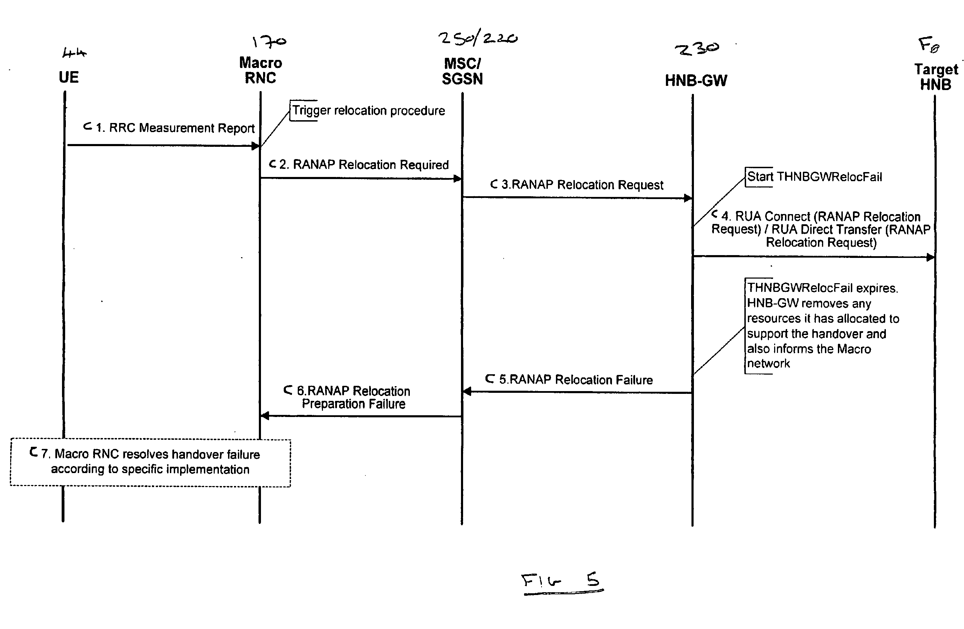

Figure 5 illustrates the flow of messages between the main components of the telecommunications network when performing a handover from a macro base station 22 to a femto base station F_{B}. Once again, the user equipment 44 notices that the quality of service being provided by the macro base station 22 is degrading and detects the presence of the femto base station F_{B}.

Accordingly, at step C1, the user equipment 44 sends a measurement report including characteristics of the target femto base station F_{B} via the macro base station 22 to the macro RNC 170.

The macro RNC 170 initiates the relocation procedure and, at step C2, sends a RANAP relocation required message to the MSC 250/SGSN 220.

At step C3 the MSC 250/SGSN 220 forwards a RANAP relocation request to the femto gateway 230.

The femto gateway 230 then, at step C4, transmits either an RUA connect message encapsulating a RANAP relocation request message or a RUA direct transfer message encapsulating a RANAP relocation request message to the target femto base station F_{B}. The femto gateway also starts a timer T_{HNB-GWRELOCFAIL}.

Optionally, after a particular amount of time, the femto gateway 230 may retransmit RUA connect message encapsulating a RANAP relocation request message or a RUA direct transfer message encapsulating a RANAP relocation request message to the target femto base station F_{B}.

When the timer T_{HNB-GWRELOCFAIL} reaches a predetermined time from the initial transmission of the message transmitted at step C4 (or if a countdown timer is used, the timer reaches zero) and no acknowledgement message has been received from the target femto base station F_{B} (such as an RUA direct transfer message encapsulating a RANAP relocation preparation acceptance message) then it can be assumed that, for whatever reason, a failure has occurred at the target femto base station F_{B}.

Accordingly, the femto gateway 230 at this stage releases any resources which it has allocated to support the handover. For example, any entries in any pending request tables may be deleted and any mapping between the user equipment 44 and the target femto base station F_{B} may be deleted. Although the process could be allowed to finish at this point and the other network nodes involved in the handover could be allowed to time-out and assume that a failure has occurred somewhere in the network, in this embodiment the occurrence of the failure is promulgated back to the source macro base station 22.

Accordingly, at step C5, an RANAP relocation failure message is transmitted from the femto gateway 230 to the MSC 250/SGSN 220. This message identifies to the MSC 250/SGSN 220 that the relocation procedure has failed.

At step C6, an RANAP relocation preparation failure message is transmitted from the MSC 250/SGSN 220 to the RNC 170. This message identifies to the RNC 170 that the relocation procedure has failed.

At step C7, the RNC 170 can then take any ameliorative action required, dependent on the particular deployment and implementation used.

Hence, it can be seen that signalling can occur between the network elements which is fully compliant with existing standards. Failures of the handover procedure can be detected and handled within the femto network itself. This solution allows these failures to be handled in a deterministic manner and allow the network to detect and recover from these as swiftly as possible.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method of controlling handover of user equipment (44) to a femto base station (F_{A}, F_{B} :F_{C}) of a wireless telecommunications network (10), said method comprising the steps of:
transmitting a first message from a femto gateway (230) to a target femto base station advising that a handover of user equipment is to occur; and
in the event that an acknowledgement of said first message is not received at said femto gateway from said target femto base station within a predetermined period of time, causing resources allocated to support said handover to be released by transmitting a second message from said femto gateway to a source network element which initiated said handover to cause resources allocated within said source network element to support said handover to be released.

2. The method of claim 1, wherein said step of causing resources allocated to support said handover to be released comprises:
releasing resources allocated within said femto gateway to support said handover.

3. The method of claim 1 or 2, wherein said source network element comprises one of a source femto base station and a core network macro element.

4. The method of any preceding claim, wherein said step of causing resources allocated to support said handover to be released comprises:
transmitting a third message to said target femto base station to cause resources allocated within said target femto base station to support said handover to be released.

5. The method of any preceding claim, comprising the step of:
prior to expiration of said predetermined period of time, in the event that said acknowledgement of said message is not received at said femto gateway from said target femto base station, re-transmitting said message from said femto gateway to said target femto base station advising that said handover of said user equipment is to occur.

6. The method of any preceding claim, wherein said first message comprises a radio access network application protocol user adaption message incorporating a radio access network application protocol relocation request message and said acknowledgement message comprises a radio access network application protocol user adaption message incorporating a radio access network application protocol relocation request acknowledge message.

7. The method of any preceding claim, wherein said second message comprises one of a radio access network application protocol user adaption message incorporating a radio access network application protocol relocation preparation failure message, a radio access network application protocol user adaption disconnect message and a radio access network application protocol relocation failure message.

8. The method of any one of claims 4 to 7, wherein said third message comprises a radio access network application protocol user adaption disconnect message.

9. A femto gateway (230), comprising:
transmission logic operable to transmit a first message to a target femto base station advising that a handover of user equipment is to occur; and
handover logic operable, in the event that an acknowledgement of said first message is not received from said target femto base station within a predetermined period of time, to cause resources allocated to support said handover to be released by transmitting a second message to a source network element which initiated said handover to cause resources allocated within said source network element to support said handover to be released.

10. The femto gateway of claim 9, wherein said handover logic is operable to cause resources allocated to support said handover to be released by releasing resources allocated within said femto gateway to support said handover.

11. The femto gateway of claim 9 or 10, wherein said handover logic is operable to cause resources allocated to support said handover to be released by transmitting a third message to said target femto base station to cause resources allocated within said target femto base station to support said handover to be released.

12. The femto gateway of any one of claims 9 to 11, wherein said handover logic is operable, prior to expiration of said predetermined period of time, in the event that said acknowledgement of said message is not received from said target femto base station, to re-transmit said message from said femto gateway to said target femto base station advising that said handover of said user equipment is to occur.

13. A computer program product operable, when executed on a computer, to perform the method steps of any one of claims 1 to 8.

## Patentansprüche

1. Verfahren zur Steuerung des Weiterreichens eines Benutzergeräts (44) an eine Femtobasisstation (F_{A}, F_{B} F_{C}) eines drahtlosen Telekommunikationsnetzwerks (10), wobei das Verfahren die folgenden Schritte umfasst:
Übertragen einer ersten Nachricht von einem Femto-Gateway (230) an eine Ziel-Femtobasisstation, um diese zu benachrichtigen, dass ein Weiterreichen des Benutzergeräts erfolgen soll, und
wenn innerhalb einer vorgegebenen Zeitspanne keine Bestätigung der besagten ersten Nachricht von der besagten Ziel-Femtobasisstation an dem besagten Femto-Gateway empfangen wird, verursachen, dass für die Unterstützung des besagten Weiterreichens zugewiesene Ressourcen freigegeben werden, indem eine zweite Nachricht von dem besagten Femto-Gateway an ein Quell-Netzwerkelement, welches das besagte Weiterreichen initiiert hat, übertragen wird, um zu verursachen, dass die innerhalb des besagten Quell-Netzwerkelements für die Unterstützung des besagten Weiterreichens zugewiesenen Ressourcen freigegeben werden.

2. Verfahren nach Anspruch 1, wobei der besagte Schritt des Verursachens, dass für die Unterstützung des besagten Weiterreichens zugewiesene Ressourcen freigegeben werden, umfasst:
Freigeben der innerhalb des besagten Femto-Gateways für die Unterstützung des besagten Weiterreichens zugewiesenen Ressourcen.

3. Verfahren nach Anspruch 1 oder 2, wobei das besagte Quell-Netzwerkelement entweder eine Quell-Femtobasisstation oder ein Kernnetzwerk-Makroelement umfasst.

4. Verfahren nach einem beliebigen der vorstehenden Ansprüche, wobei der besagte Schritt des Verursachens, dass für die Unterstützung des besagten Weiterreichens zugewiesene Ressourcen freigegeben werden, umfasst:
Übertragen einer dritten Nachricht an die besagte Ziel-Femtobasisstation, um zu verursachen, dass die innerhalb der besagten Ziel-Femtobasisstation für die Unterstützung des besagten Weiterreichens zugewiesenen Ressourcen freigegeben werden.

5. Verfahren nach einem beliebigen der vorstehenden Ansprüche, den folgenden Schritt umfassend:
Vor Ablauf der besagten vorgegebenen Zeitspanne, und wenn die besagte Bestätigung der besagten Nachricht von der besagten Ziel-Femtobasisstation nicht an dem besagten Femto-Gateway empfangen wird, erneutes Übertragen der besagten Nachricht von dem besagten Femto-Gateway an die besagte Ziel-Femtobasisstation, um diese zu benachrichtigen, dass das besagte Weiterreichen des besagten Benutzergeräts erfolgen soll.

6. Verfahren nach einem beliebigen der vorstehenden Ansprüche, wobei die besagte erste Nachricht eine Radio Access Network Application Protocol User Adaptation-Nachricht, in welche eine Radio Access Network Application Protocol User Adaptation Relocation Request-Nachricht eingebettet ist, und die besagte Acknowledgement-Nachricht eine Radio Access Network Application Protocol User Adaption-Nachricht, in welche eine Radio Access Network Application Protocol Relocation Request Acknowledge-Nachricht eingebettet ist, enthält.

7. Verfahren nach einem beliebigen der vorstehenden Ansprüche, wobei die besagte zweite Nachricht entweder eine Radio Access Network Application Protocol User Adaptation-Nachricht, in welche eine Radio Access Network Application Protocol Relocation Preparation Failure-Nachricht eingebettet ist, eine Radio Access Network Application Protocol User Adaption Disconnect-Nachricht oder eine Radio Access Network Application Protocol Relocation Failure-Nachricht enthält.

8. Verfahren nach einem beliebigen der Ansprüche 4 bis 7, wobei die besagte dritte Nachricht eine Radio Access Network Application Protocol User Adaption Disconnect-Nachricht umfasst.

9. Femto-Gateway (230), umfassend:
Eine Übertragungslogik, welche betreibbar ist, um eine erste Nachricht an eine Ziel-Femtobasisstation zu übertragen, um diese zu benachrichtigen, dass ein Weiterreichen des Benutzergeräts erfolgen soll; und
Eine Handover-Logik, welche betreibbar ist, um, wenn innerhalb einer vorgegebenen Zeitspanne keine Bestätigung der besagten ersten Nachricht von der besagten Ziel-Femtobasisstation empfangen wird, zu verursachen, dass für die Unterstützung des besagten Weiterreichens zugewiesene Ressourcen freigegeben werden, indem eine zweite Nachricht an ein Quell-Netzwerkelement, welches das besagte Weiterreichen initiiert hat, übertragen wird, um zu verursachen, dass innerhalb des besagten Quell-Netzwerkelements für die Unterstützung des besagten Weiterreichens zugewiesene Ressourcen freigegeben werden.

10. Femto-Gateway nach Anspruch 9, wobei die besagte Handover-Logik betreibbar ist, um zu verursachen, dass für die Unterstützung des besagten Weiterreichens zugewiesene Ressourcen freigegeben werden, indem innerhalb des besagten Femto-Gateways für die Unterstützung des Weiterreichens zugewiesene Ressourcen freigegeben werden.

11. Femto-Gateway nach Anspruch 9 oder 10, wobei die besagte Handover-Logik betreibbar ist, um zu verursachen, dass für die Unterstützung des besagten Weiterreichens zugewiesene Ressourcen freigegeben werden, indem eine dritte Nachricht an die besagte Ziel-Femtobasisstation übertragen wird, um zu verursachen, dass für die Unterstützung des besagten Weiterreichens innerhalb der besagten Ziel-Femtobasisstation zugewiesene Ressourcen freigegeben werden.

12. Femto-Gateway nach einem beliebigen der Ansprüche 9 bis 11, wobei die besagte Handover-Logik betreibbar ist, um vor Ablauf der besagten vorgegebenen Zeitspanne, wenn die besagte Bestätigung der besagten Nachricht nicht von der besagten Ziel-Femtobasisstation empfangen wird, die besagte Nachricht erneut von dem besagten Femto-Gateway an die besagte Ziel-Femtobasisstation zu übertragen, um diese zu benachrichtigen, dass das besagte Weiterreichen des besagten Benutzergeräts erfolgen soll.

13. Computerprogramm-Produkt, betreibbar, um bei dessen Ausführung auf einem Computer die Verfahrensschritte gemäß einem beliebigen der Ansprüche 1 bis 8 durchzuführen.

## Revendications

1. Procédé de commande de transfert d'équipement utilisateur (44) vers une station de base femto (F_{A}, F_{B} F_{C}) d'un réseau de télécommunication sans fil (10), ledit procédé comprenant les étapes suivantes :
transmettre un premier message depuis une passerelle femto (230) vers une station de base femto cible informant qu'un transfert d'équipement utilisateur va se produire ; et
au cas où un accusé de réception dudit premier message n'est pas reçu au niveau de ladite passerelle femto depuis ladite station de base femto cible pendant une période prédéterminée, amener des ressources allouées à assurer ledit transfert devant être libéré en transmettant un deuxième message depuis ladite passerelle femto vers un élément de réseau source qui a initié ledit transfert pour amener des ressources allouées dans ledit élément de réseau source à assurer ledit transfert devant être libéré.

2. Procédé selon la revendication 1, dans lequel ladite étape amenant des ressources allouées à assurer ledit transfert devant être libéré comprend l'étape suivante :
libérer des ressources allouées dans ladite passerelle femto pour assurer ledit transfert.

3. Procédé selon la revendication 1 ou 2, dans lequel ledit élément de réseau source comprend une station de base femto source ou un macro-élément de coeur de réseau.

4. Procédé selon l'une quelconque des revendications précédentes, dans lequel ladite étape amenant des ressources allouées à assurer ledit transfert devant être libéré comprend l'étape suivante :
transmettre un troisième message à ladite station de base femto cible pour amener des ressources allouées dans ladite station de base femto cible à assurer ledit transfert devant être libéré.

5. Procédé selon l'une quelconque des revendications précédentes, comprenant l'étape suivante :
avant l'expiration de ladite période prédéterminée, au cas où ledit accusé de réception dudit message n'est pas reçu au niveau de ladite passerelle femto depuis ladite station de base femto cible, retransmettre ledit message, depuis ladite passerelle femto vers ladite station de base femto cible, informant que ledit transfert dudit équipement utilisateur va se produire.

6. Procédé selon l'une quelconque des revendications précédentes, dans lequel ledit premier message comprend un message d'adoption d'utilisateur de protocole d'application d'accès radio intégrant un message de requête de relocalisation de protocole d'application de réseau d'accès radio et ledit message d'accusé de réception comprend un message d'adoption d'utilisateur de protocole d'application de réseau d'accès radio intégrant un message d'accusé de réception de requête de relocalisation de protocole d'application de réseau d'accès radio.

7. Procédé selon l'une quelconque des revendications précédentes, dans lequel ledit deuxième message comprend un message d'adoption d'utilisateur de protocole d'application de réseau d'accès radio intégrant un message d'échec de préparation de relocalisation de protocole d'application de réseau d'accès radio, un message de déconnexion d'adoption d'utilisateur de protocole d'application de réseau d'accès radio ou un message d'échec de relocalisation de protocole d'application de réseau d'accès radio.

8. Procédé selon l'une quelconque des revendications 4 à 7, dans lequel ledit troisième message comprend un message de déconnexion d'adoption d'utilisateur de protocole d'application de réseau d'accès radio.

9. Passerelle femto (230), comprenant :
une logique de transmission permettant de transmettre un premier message vers une station de base femto cible informant qu'un transfert d'équipement utilisateur va se produire ; et
une logique de transfert permettant, au cas où un accusé de réception dudit premier message n'est pas reçu depuis ladite station de base femto cible pendant une période prédéterminée, d'amener des ressources allouées à assurer ledit transfert devant être libéré en transmettant un deuxième message vers un élément de réseau source qui a initié ledit transfert pour amener des ressources allouées dans ledit élément de réseau source à assurer ledit transfert devant être libéré.

10. Passerelle femto selon la revendication 9, dans laquelle ladite logique de transfert permet d'amener des ressources allouées à assurer ledit transfert devant être libéré en libérant des ressources allouées dans ladite passerelle femto pour assurer ledit transfert.

11. Passerelle femto selon la revendication 9 ou 10, dans laquelle ladite logique de transfert permet d'amener des ressources allouées à assurer ledit transfert devant être libéré en transmettant un troisième message vers ladite station de base femto cible pour amener des ressources allouées dans ladite station de base femto cible à assurer ledit transfert devant être libéré.

12. Passerelle femto selon l'une quelconque des revendications 9 à 11, dans laquelle ladite logique de transfert permet, avant l'expiration de ladite période prédéterminée, au cas où ledit accusé de réception dudit message n'est pas reçu depuis ladite station de base femto cible, de retransmettre ledit message, depuis ladite passerelle femto vers ladite station de base femto cible, informant que ledit transfert dudit équipement utilisateur va se produire.

13. Produit de programme informatique permettant, lorsqu'il est exécuté dans un ordinateur, d'exécuter les étapes du procédé selon l'une quelconque des revendications 1 à 8.
